# EUROPEAN PATENT APPLICATION

(11) **EP 4 840 544 A1**
(43) Date of publication of application: **18.11.2026**
(21) Application number: 24916587.9
(22) Date of filing: 26.11.2024
(51) Int. Cl.: B01L 3/00, B01J 19/00, B01J 4/04, B01J 4/00

(54) **MICROFLUIDIC CHIP**

(30) Priority: 11.01.2024 CN 202410039687
(71) Applicant: LC-Biotechnologies (Hangzhou) Co., Ltd., Hangzhou, Zhejiang 310000 (CN)
(72) Inventor: ZHANG, Huigang, Hangzhou, Zhejiang 310000 (CN); LI, Lulu, Hangzhou, Zhejiang 310000 (CN); LANG, Qiulei, Hangzhou, Zhejiang 310000 (CN); FANG, Chao, Hangzhou, Zhejiang 310000 (CN)
(74) Representative: Dai, Simin
(86) International application number: PCT/CN2024/134473
(87) International publication number: WO 2025/148537

(57) **Abstract**

The present disclosure relates to the technical field of microfluidics, speicifically, the present disclosure provide a microfluidic chip, comprising a chip body (1). The chip body (1) includes two main channels (3) and one or more reaction regions (2). Each of the one or more reaction regions (2) includes a distribution channel (21) and a plurality of reaction units (22). The distribution channel (21) includes an inlet and an outlet. One of the two main channels (3) is configured for introducing a reagent into the distribution channel (21), and the other of the two main channels (3) is configured for the reagent in the distribution channel (21) to flow out. Each of the inlet and the outlet of the distribution channel (21) is provided with a control node configured for controlling whether the distribution channel (21) is in communication with one of the two main channels (3). The control node includes a passage in communication with the main channels (3) and the distribution channel (21) and an elastic membrane (61) provided in the passage. The elastic membrane (61) is configured to change its shape by deforming under force to open the passage intermittently. In the present disclosure, the liquid may be added in a pulsed manner, thereby increasing the opportunity for exchange and reaction of the reagents within the reaction units (22), which is conducive to the reaction of the reagents.

## Description

### TECHNICAL FIELD

The present disclosure relates to the technical field of microfluidics, and specifically relates to a microfluidic chip.

### BACKGROUND

A microfluidic chip is also commonly referred to as a biochip. Microfluidic technology can integrate the entire experimental process and functions, such as sampling, dilution, reagent addition, reaction, separation, and detection in conventional biochemical analysis, onto a small-volume solid-phase material such as a silicon-based material, glass, plastic, or metal, so as to form a microchip including a plurality of micro-nano channels and a plurality of reaction cavities with micro-nano liter volumes. A controllable fluid runs through the whole system to realize various functions of a conventional chemical or biological laboratory. The microfluidic chip can be applied in fields such as point-of-care testing (POCT), gene sequencing, environmental protection, food safety, and scientific research.

In some related technologies, a plurality of reaction units of a high-throughput microfluidic chip are in communication with each other through a distribution channel, which is equivalent to the plurality of reaction units forming a whole. Consequently, when a certain reaction unit is damaged, an actual pressure parameter of the distribution channel of the microfluidic chip is greatly different from an initial design parameter of the distribution channel, and the whole microfluidic chip cannot be used normally.

Moreover, for the high-throughput microfluidic chip, the liquid addition thereof is a continuous liquid addition process, that is, from the start of liquid addition to the completion of liquid addition, the liquid is continuously added at a constant flow rate during the entire process, making it difficult for the reagents in each reaction unit and distribution channel to be fully exchanged and reacted, which is not conducive to the reaction efficiency of the reagents.

### SUMMARY

In order to solve at least one of the technical problems in the background, an objective of the present disclosure is to provide a microfluidic chip.

To achieve the above objective, the present disclosure provides the following technical solutions.

One or more embodiments of the present disclosure provide a microfluidic chip, comprising: a chip body, the chip body including two main channels and one or more reaction regions, each reaction region including a distribution channel and a plurality of reaction units in communication with each other through the distribution channel;
the distribution channel includes an inlet and an outlet, one of the two main channels is configured for communicating with the inlet to introduce a reagent into the distribution channel, and the other of the two main channels is configured for communicating with the outlet for the reagent in the distribution channel to flow out; the inlet and the outlet of the distribution channel are each provided with a control node, the control node is configured for controlling whether the distribution channel is in communication with one of the two main channels; the control node includes a passage in communication with the corresponding main channel and the distribution channel and an elastic membrane provided in the passage; the elastic membrane is configured to change its shape by deforming under force to open the passage intermittently; the passage includes two through-holes both disposed in the chip body; a first end of one of the two through-holes is in communication with the distribution channel, and a first end of the other of the two through-holes is in communication with the corresponding main channel; the elastic membrane is capable of switching between a first state and a second state; in the second state, the elastic membrane simultaneously opens second ends of the two second through-holes to open the passage; in the first state, the second end of at least one of the two through-holes is sealed by the elastic membrane to close the passage;
during liquid addition, the two elastic membranes at the inlet and the outlet alternately deform to alternately push the reagent to flow in the distribution channel and the reaction units in a pulsating form;
after the microfluidic chip completes the liquid addition, the microfluidic chip enters an oscillation mode, and at least one of the elastic membranes is driven to perform intermittent pulsating deformation to intermittently oscillate the reagent in the distribution channel and the reaction units.

As an optional embodiment of the present disclosure, the elastic membrane is driven by gas pressure to switch between the first state and the second state.

As an optional embodiment of the present disclosure, the control node further includes an air chamber disposed in the chip body and having an air inlet; the air chamber has an opening side, and the elastic membrane covers the opening side of the air chamber; the second ends of the two through-holes and the air chamber are respectively located on opposite sides of the elastic membrane.

As an optional embodiment of the present disclosure, the air inlet is provided with a three-way valve, the three-way valve includes two gas inlets, one of the two gas inlets is in communication with a positive-pressure gas source, and the other of the two gas inlets is connected to a negative-pressure gas source.

As an optional embodiment of the present disclosure, a through-hole in communication with the corresponding main channel constitutes a first through-hole, and the first through-hole is in communication with the corresponding main channel through a branch channel.

As an optional embodiment of the present disclosure, a front surface of the chip body is a light-transmissive surface, and at least one of the two main channels and the one or more reaction regions is visible through a front surface of the chip body.

As an optional embodiment of the present disclosure, the chip body includes a chip substrate and a cover plate; the cover plate is a transparent structure; the cover plate covers the chip substrate to cooperate with the chip substrate to define the one or more reaction regions and the two main channels.

As an optional embodiment of the present disclosure, the two main channels are each connected to a liquid tube.

As an optional embodiment of the present disclosure, the elastic membrane is a polymeric membrane.

Compared with the prior art, the advantages of adopting the present solution are as follows:
First, in this solution, by providing control nodes at both the inlet and outlet of the branch channel, and by designing the control nodes to be controlled by the elastic membrane for intermittently opening the passage, in such a configuration, during the liquid addition, the two elastic membranes at the inlet and outlet can alternately deform. When the two elastic membranes are driven to perform intermittent pulsating deformation, they function similarly to a diaphragm pump, alternately pushing the reagent in a pulsed manner to flow through the branch channel and the reaction unit. Compared with steady liquid addition, such pulsed liquid addition can increase the opportunity for exchange and reaction of the reagents within the reaction unit, thereby facilitating the reaction of the reagents.

After liquid addition is completed, the entire reaction unit and the branch channel are substantially filled with the reagent. At this time, by driving the two elastic membranes to perform intermittent pulsating deformation, the reagent in the branch channel and the reaction unit can be intermittently oscillated. In this way, the reagent is in an oscillating state, which can increase the opportunity for reagent exchange and reaction, and is particularly suitable for chip washing.

In addition, when the count of reaction region is designed to be two or more, it is equivalent to dividing the entire chip into multiple regions. Since each region is provided with control nodes at its inlet and outlet for controlling the opening and closing of the passage, each region is equivalent to an independent part. Thus, even if a reaction unit in one of the reaction regions is damaged, only the reaction region containing the damaged reaction unit is affected, while the other reaction regions remain unaffected, thereby avoiding the scrapping of the entire chip.

Precisely because each reaction region is an independent part that can be individually controlled by the control nodes, zone-selective control can be achieved. For example, if it is desired to introduce only a certain reagent A into a designated reaction region without allowing the reagent to enter other reaction regions, it is sufficient to open only the control nodes of the designated reaction region during liquid addition, so that reagent A may not be introduced into the other reaction regions.

### BRIEF DESCRIPTION OF THE DRAWINGS

FIG. 1 is a schematic diagram illustrating a structure the present disclosure;
FIG. 2 is an exploded view of the present disclosure;
FIG. 3 is a schematic diagram illustrating a cross-section of the present disclosure;
FIG. 4 is an enlarged view of part B in FIG. 3;
FIG. 5 is a partial top view illustrating a chip core according to the present disclosure; and
FIG. 6 is a schematic diagram illustrating an elastic membrane switching from a first state to a second state according to of the present disclosure.

### DETAILED DESCRIPTION

The technical solutions of embodiments of the present disclosure are hereinafter explained and described with reference to the accompanying drawings. The following embodiments are merely preferred embodiments of the present disclosure, and are not exhaustive. Based on the embodiments described in the present disclosure, other embodiments obtained by those skilled in the art without making creative efforts all fall within the scope of protection of the present disclosure.

In the following descriptions, terms such as 'inner', 'outer', 'upper', 'lower', 'left', 'right', or the like, indicating orientations or positional relationships, are merely for convenience in describing the embodiments and simplifying the descriptions, and are not intended to indicate or imply that the referred apparatus or components must have a specific orientation, or be constructed and operated in a specific orientation, and therefore should not be construed as a limitation on the present disclosure.

### Embodiment 1

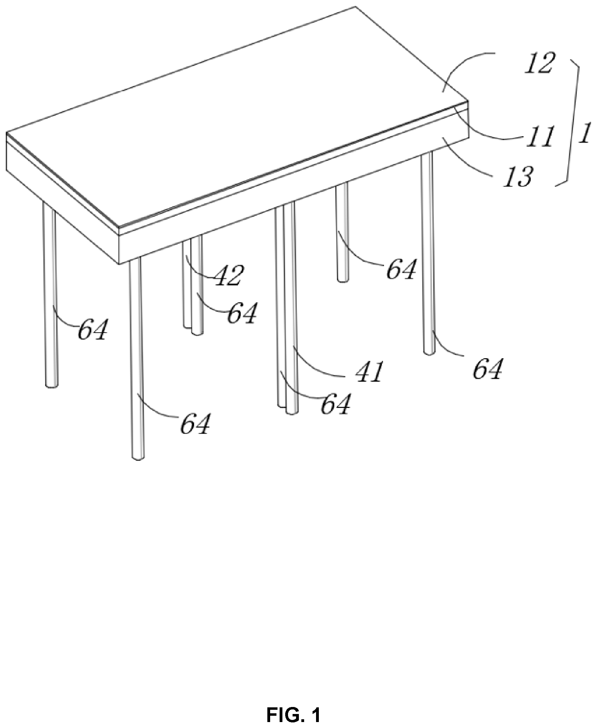

Referring to FIG. 1, a microfluidic chip includes a chip body 1. The chip body 1 includes two main channels 3 and one or more reaction regions 2, preferably, a plurality of reaction regions 2 arranged at intervals may also be divided and formed within the chip body 1.

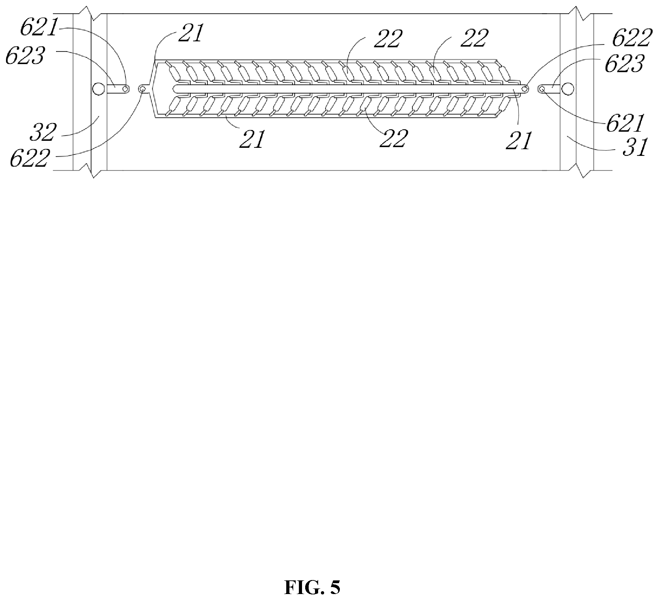

As shown in FIG. 5, each of the reaction regions 2 includes the distribution channel 21 and the plurality of reaction units 22 in communication with each other through the distribution channel 21. That is, within a reaction region 2, the respective reaction units 22 are in communication with each other through the distribution channel 21, thereby allowing the reagent to flow into the respective reaction units 22 through the distribution channel 21.

The distribution channel 21 includes an inlet, an outlet, two main channels 3, one of the two main channels is configured for communicating with the inlet to introduce a reagent into the distribution channel 21, and the other of the two main channels is configured for communicating with the outlet for the reagent in the distribution channel 21 to flow out.

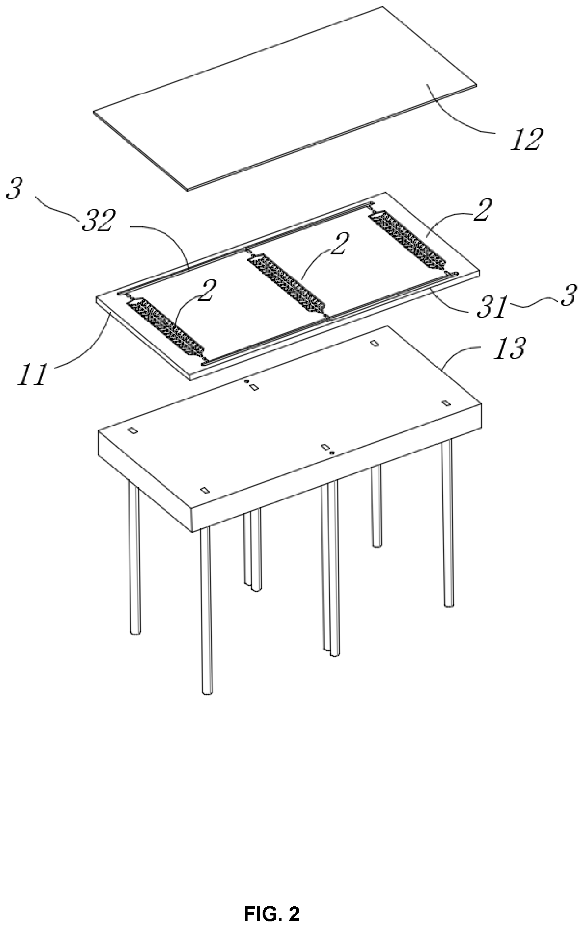

For example, in some embodiments, as shown in FIG. 2, the two main channels 3 are arranged side-by-side on two sides of the chip body 1, and the reaction region 2 is laterally disposed between the two main channels 3.

For ease of understanding, one of the two main channels 3, which is in communication with the inlet of the distribution channel 21, is denoted as an inlet channel 31, and correspondingly, the other of the two main channels 3, which is in communication with the outlet of the distribution channel 21, is denoted as a return channel 32. During the liquid addition, the reagent flows into the distribution channel 21 through the inlet of the distribution channel 21 via the inlet channel 31. Finally, the reagent in the distribution channel 21 flows to the return channel 32 through the outlet of the distribution channel 21, and is discharged by the return channel 32.

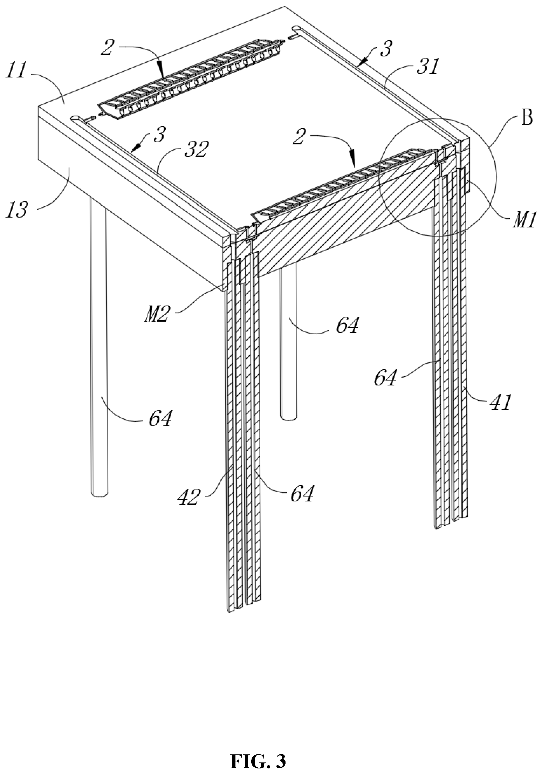

The two main channels 3 are both connected to a liquid tube. For example, as shown in FIG. 3, a bottom of the inlet channel 31 is in communication with an inlet tube 41, and a bottom of the return channel 32 is in communication with a return tube 42.

In some embodiments, two ends of the distribution channel 21 form an inlet and an outlet, respectively, and the inlet and the outlet of the branch channel 21 are each provided with a control node. It should be understoond that, as shown in FIG. 3, each reaction region 2 is provided with the two control nodes. The control node is configured for controlling whether the distribution channel 21 is in conmmunication with the main channel 3. One of the reaction regions 2 is described below as an example.

As shown in FIG. 3, a control node is provided between the inlet channel 31 and the inlet of the distribution channel 21, and a control node is provided between the return channel 32 and the outlet of the distribution channel 21. The two control nodes are similar in structure, taking one of the control nodes as an example for illustration.

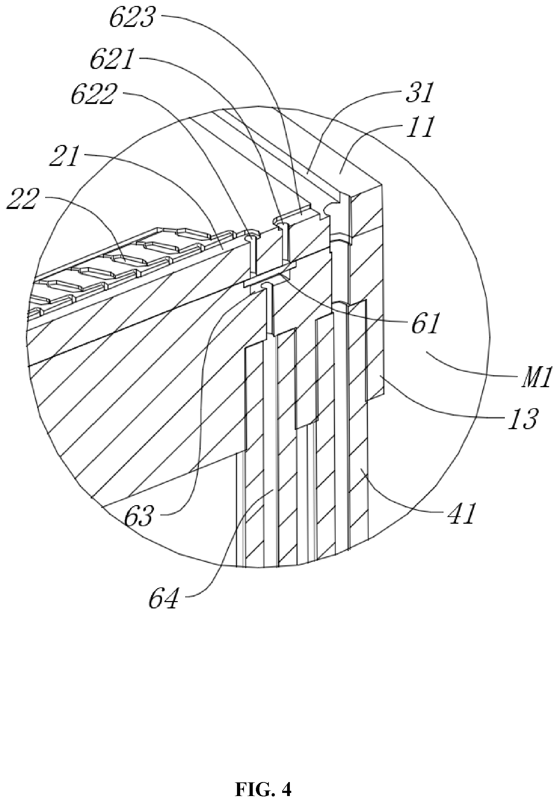

As shown in FIG. 4, the control node includes the elastic membrane 61 and a passage in communication with the main channel 3 and the distribution channel 21, taking the node between the inlet channel 31 and the inlet of the distribution channel 21 as the example, the inlet channel 31 and the inlet of the distribution channel 21 are in communication with each other through the passage.

The elastic membrane 61 is fixedly disposed in the passage, the elastic membrane 61 is configured to change its shape by deforming under force to open the passage intermittently, when the passage opens, and the corresponding main channel 3 and the distribution channel 21 are in communication with each other. When the passage closes, and the corresponding main channel 3 and the distribution channel 21 are disconnected.

In some embodiments, the elastic membrane 61 is a polymeric membrane, such as polytetrafluoroethylene (PTFE), thermoplastic polyurethane (TPU) film, polyethylene (PE) film, or silicone rubber film.

First, it can be understood that, in some embodiments, the chip is divided into a plurality of reaction regions 2 with the cooperation of the control nodes, indicating that each reaction region 2 is equivalent to an independent reaction region 2. Thus, even if a reaction unit in one of the reaction regions is damaged, only the reaction region containing the damaged reaction unit is affected, while the other reaction regions remain unaffected, thereby avoiding the scrapping of the entire chip. In use, it is only necessary to close the control nodes at both ends of the damaged reaction region 2.

Precisely because each reaction region 2 is an independent part that can be individually controlled by the control nodes, zone-selective control can be achieved. For example, if it is desired to introduce only a certain reagent A into a designated reaction region 2 without allowing the reagent to enter other reaction regions 2, it is sufficient to open only the control nodes of the designated reaction region 2 during liquid addition, so that reagent A may not be introduced into the other reaction regions 2.

Further, by providing control nodes at both the inlet and outlet of the branch channel 21, and designing the control nodes to be controlled by the elastic membrane 61 for intermittently opening the passage, during the liquid addition, by means of the two elastic membranes 61 disposed at the inlet and the outlet alternately deforming, the two elastic membranes 61, when alternately deforming and pulsating, which functions similarly to a diaphragm pump, alternately push the reagent to flow in the distribution channel 21 and the reaction units 22 in a pulsating form, thereby achieving liquid addition. Compared to a liquid addition process with a constant flow rate, a liquid addition process in the pulsating form may increase the chances of exchange reaction for the reagent in the reaction units 22, which is beneficial for the reaction of the reagent.

In addition, after the liquid addition is completed, the the microfluidic chip enters an oscillation mode, speicifically, the reaction units 22 and the distribution channel 21 are substantially filled with the reagent. At this time, as long as at least one elastic membrane 61 is driven to perform intermittent pulsating deformation, the reagent in the distribution channel 21 and the reaction units 22 may be intermittently oscillated, the reagent is in an oscillating state, which can increase the chances of exchange reaction for the reagent and is particularly advantageous for chip washing.

A specific structure of the passage is as follows: the passage includes two through-holes, both of which are opened in the chip body 1. One of the two through-holes is in communication with the distribution channel 21, and the other of the two through-holes is in communication with the main channel 3. For ease of description, a through-hole in communication with the main channel 3 is denoted as a first through-hole 621, and a through-hole in communication with the distribution channel 21 is denoted as a second through-hole 622.

The control node between the inlet channel 31 and the inlet of the distribution channel 21 is described below as an example.

As shown in FIG. 4, the upper end (i.e., the first end) of the second through-hole 622 in the control node is in communication with the inlet of the distribution channel 21, and the upper end (i.e., the first end) of the first through-hole 621 is in communication with the inlet channel 31. For example, the first through-hole 621 is in communication with the main channel 3 (the inlet channel 31) through the branch passage 623.

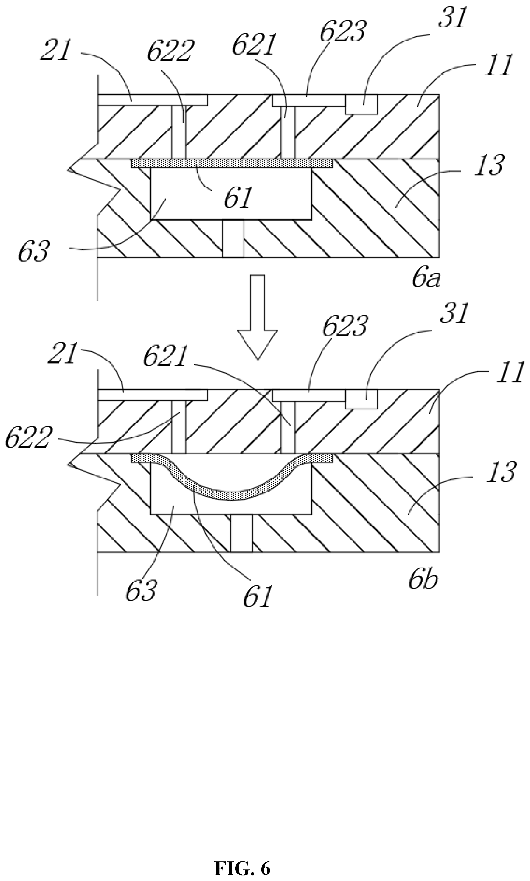

The elastic membrane 61 is capable of switching between the first state and the second state. For example, FIG. 6 is a schematic diagram illustrating an elastic membrane 61 switching from a first state to a second state according to some embodiments of the present disclosure, wherein FIG. 6a is a view of the elastic membrane 61 in the first state, and FIG. 6b is a view of the elastic membrane 61 in the second state.

As shown in FIG. 6, in the second state, the elastic membrane 61 simultaneously opens the second ends of the two through-holes, the passage 62 opens; in the first state, the second end of at least one of the two through-holes is sealed by the elastic membrane 61, the passage 62 closes. The embodiment shows that both of the two through-holes are sealed by the elastic membrane 61.

In some embodiments, the elastic membrane 61 may also be driven by gas pressure to switch between the first state and the second state.

Specifically, as shown in FIGs. 4 and 6, the control node further includes an air chamber 63 disposed in the chip body 1 and having an air inlet; the air chamber 63 has an opening side. For example, an opening of an upper end of the air chamber 63 is disposed as an opening side.

The elastic membrane 61 covers the opening side of the air chamber 63, so that the air chamber 63 forms a closed space; the second ends of the two through-holes and the air chamber 63 are respectively located on the opposite sides of the elastic membrane 61, specifically, the second ends of both the first through-hole 621 and the second through-hole 622 are located on the upper side of the elastic membrane 61, and the air chamber 63 is located on the lower side of the elastic membrane 61.

When a negative pressure is introduced into the air chamber 63, the negative pressure is generated within the air chamber 63. As shown in FIG. 6b, the elastic membrane 61 deforms downwards under the negative pressure to form a concave space, at which time the elastic membrane 61 is in the second state. In this state, the lower end of the first through-hole 621 and the lower end of the second through-hole 622 are in communication with each other through the concave space, thereby forming a path, realizing the opening of the passage, and further realizing the communication between the main channel 3 and the distribution channel 21.

Conversely, when a positive pressure is introduced into the air chamber 63, the elastic membrane 61 deforms upwards under the positive pressure, abutting against the lower ends of the first through-hole 621 and the second through-hole 622. As shown in FIG. 6a, at this time the elastic membrane 61 is in the first state. In this state, the elastic membrane 61 seals the lower ends of the first through-hole 621 and the second through-hole 622, thereby realizing the closing of the passage.

To control the input of positive pressure source and negative pressure source, in some embodiments, the air inlet 631 is connected to an air tube 64, and the air tube 64 is provided with a three-way valve 65 (not shown in figures), the three-way valve includes two gas inlets, one of the two gas inlets is in communication with a positive-pressure gas source, and the other of the two gas inlets is connected to a negative-pressure gas source. When the positive pressure source needs to be introduced, only the gas inlet of the three-way valve 65 connected to the positive-pressure gas source needs to be opened. Conversely, when the negative pressure source needs to be introduced, only the gas inlet of the three-way valve 65 connected to the negative-pressure gas source needs to be opened.

Furthermore, in some embodiments, for convenient observation or capture of the microfluidic state, the reaction, or the like, of the reagent in the reaction region 2 and/or the main channel 3, in some embodiments, the front surface of the chip body 1 is the light-transmissive surface, and at least one of the two main channels 3 and the one or more reaction regions 2 is visible through the front surface of the chip body 1. Preferably, at least the main channel 3 and the reaction units 22 in the reaction region 2 and the distribution channel 21 are exposed on the light-transmissive surface.

Specifically, as shown in FIG. 2, the chip body 1 includes a chip substrate and a cover plate 12; the cover plate 12 is a transparent structure; the cover plate 12 covers the chip substrate to cooperate with the chip substrate to define the one or more reaction regions 2 and the two main channels 3. At this time, it can be understood that the main channel 3, the reaction units 22, and the distribution channel 21 are disposed between the transparent cover plate 12 and the chip substrate. Since the cover plate 12 is a transparent structure, the flow and reaction of the reagent in the main channel 3 and the reaction units 22 may be observed directly through the cover plate 12, and may also capture images through the transparent cover plate 12.

As shown in FIG. 2, the chip substrate mainly includes a chip core 11 and a chip base plate 13. Therefore, from the top to the bottom, the entire chip body 1 sequentially includes the cover plate 12, the chip core 11, and the chip base plate 13; the main channel 3, the reaction units 22, and the distribution channel 21. The first through-hole 621 and the second through-hole 622 are disposed on the chip core 11. The air chamber 63 is disposed on the chip base plate 13; the elastic membrane 61 is sandwiched between the chip base plate 13 and the chip core 11, thereby forming a cover for the opening side of the air chamber 63.

### Embodiment 2

The present disclosure provides a liquid addition manner of the microfluidic chip provided in Embodiment 1.

For convenience of description, as shown in FIG. 3, the control node disposed at the inlet of the distribution channel 21 is denoted as a first node M1, and the control node disposed at the outlet of the distribution channel 21 is denoted as a second node M2.

It may be understood that the M1 and the M2 have the same principle of opening and closing manners; therefore, the M1 is taken as an example for description.

An opening manner of the M1 is as follows: negative-pressure gas is introduced into the air chamber 63, the elastic membrane 61 deforms downward under an action of the negative pressure, thereby forming a concave space (as shown in FIG. 6b). At this time, the first through-hole 621 and the second through-hole 622 are in communication through the concave space, thereby achieving an opening of the passage, that is, an opening of the M1.

A closing manner of the M1 is as follows: positive-pressure gas is introduced into the air chamber 63, the elastic membrane 61 gradually deforms upward under an action of the positive pressure, and finally, the elastic membrane 61 blocks lower ends of the first through-hole 621 and the second through-hole 622 (as shown in FIG. 6a), thereby causing the first through-hole 621 and the second through-hole 622 to be no longer in communication. At this time, the passage is in a closed state, thereby achieving a closing of the M1.

The following describes the liquid addition manner.

When the M2 is in a closed state, the M1 is opened first. During the opening of the M1, the reagent in the inlet channel 31 gradually flows into the distribution channel 21 through the opened passage. It is worth noting that during a downward deformation of the elastic membrane 61 of the M1, the elastic membrane 61 generates a negative pressure suction force on the reagent in the through-holes, thereby allowing the reagent in the inlet channel 31 to be sucked into the concave space to a certain extent.

Next, the M1 is closed, and the M2 is opened simultaneously. During the closing of the M1, the M1 pushes upward the reagent and air located in the through-holes. During the opening of the M2, the M2 sucks in the air and the reagent in the distribution channel 21. That is, the M1 pushes the reagent forward to flow into the distribution channel 21, and the M2 sucks in the reagent in the distribution channel 21 from the rear, thereby achieving pushing forward and sucking backward, and thereby allowing the reagent to be continuously added to the distribution channel 21 intermittently in a pulsating manner. In this way, by subsequently performing the above actions in a cyclic and alternating manner, that is, alternately opening the M1 and the M2, pulsating liquid addition may be achieved, thereby causing the reagent in the distribution channel 21 and the reaction units 22 to flow in a pulsating turbulent state, and increasing an opportunity for exchange reaction of the reagent in the reaction units 22.

### Embodiment 3

The present disclosure provides an oscillation manner for oscillating the reagent using the microfluidic chip (hereinafter referred to as the oscillation manner) provided in the embodiment 1.

The microfluidic chip provided in the embodiment may further complete the oscillation of the reagent in the reaction units and the distribution channel 21 after liquid addition is completed. The following describes the oscillation manner.

After the liquid addition is completed, the entire distribution channel 21 and the reaction units 22 are basically filled with the reagent; next, the liquid tube of the inlet channel 31 and the liquid tube of the return channel are closed; then, at least one of the nodes is opened in a pulsating form, for example, only the M1 is intermittently opened, and the M2 is always in a closed state. In this way, the elastic membrane 61 of the M1 intermittently pulses and deforms, and each time an opening and closing action is completed, an oscillation effect is generated on the reagent, thereby allowing the opportunity for exchange reaction of the reagent to be increased.

It is obvious to those skilled in the art that the present disclosure is not limited to the details of the exemplary embodiments described above, and that it can be implemented in other specific forms without departing from its spirit or essential features. Therefore, in all respects, the embodiments should be regarded as illustrative and not restrictive, and the scope of this specification is defined by the appended claims rather than the above description. Accordingly, all changes within the meaning and scope of equivalency of the claims are intended to be included in the present disclosure.

## Claims

1. A microfluidic chip, comprising:
a chip body, the chip body including two main channels and one or more reaction regions, each reaction region including a distribution channel and a plurality of reaction units in communication with each other through the distribution channel;
wherein the distribution channel includes an inlet and an outlet, one of the two main channels is configured for communicating with the inlet to introduce a reagent into the distribution channel, and the other of the two main channels is configured for communicating with the outlet for the reagent in the distribution channel to flow out;
the inlet and the outlet of the distribution channel are each provided with a control node, the control node is configured for controlling whether the distribution channel is in communication with one of the two main channels; the control node includes a passage in communication with the corresponding main channel and the distribution channel and an elastic membrane provided in the passage; the elastic membrane is configured to change its shape by deforming under force to open the passage intermittently;
the passage includes two through-holes both disposed in the chip body; a first end of one of the two through-holes is in communication with the distribution channel, and a first end of the other of the two through-holes is in communication with the corresponding main channel; the elastic membrane is capable of switching between a first state and a second state; in the second state, the elastic membrane simultaneously opens second ends of the two second through-holes to open the passage; in the first state, the second end of at least one of the two through-holes is sealed by the elastic membrane to close the passage;
during liquid addition, the two elastic membranes at the inlet and the outlet alternately deform to alternately push the reagent to flow in the distribution channel and the reaction units in a pulsating form; after the microfluidic chip completes the liquid addition, the microfluidic chip enters an oscillation mode, and at least one of the elastic membranes is driven to perform intermittent pulsating deformation to intermittently oscillate the reagent in the distribution channel and the reaction units.

2. The microfluidic chip according to claim 1, wherein the elastic membrane is driven by gas pressure to switch between the first state and the second state.

3. The microfluidic chip according to claim 2, wherein the control node further includes an air chamber disposed in the chip body and having an air inlet; the air chamber has an opening side, and the elastic membrane covers the opening side of the air chamber; the second ends of the two through-holes and the air chamber are respectively located on opposite sides of the elastic membrane.

4. The microfluidic chip according to claim 3, wherein the air inlet is provided with a three-way valve, the three-way valve includes two gas inlets, one of the two gas inlets is in communication with a positive-pressure gas source, and the other of the two gas inlets is connected to a negative-pressure gas source.

5. The microfluidic chip according to claim 1, wherein a through-hole in communication with the corresponding main channel constitutes a first through-hole, and the first through-hole is in communication with the corresponding main channel through a branch channel.

6. The microfluidic chip according to claim 1, wherein a front surface of the chip body is a light-transmissive surface, and at least one of the two main channels and the one or more reaction regions is visible through a front surface of the chip body.

7. The microfluidic chip according to claim 6, wherein the chip body includes a chip substrate and a cover plate; the cover plate is a transparent structure; the cover plate covers the chip substrate to cooperate with the chip substrate to define the one or more reaction regions and the two main channels.

8. The microfluidic chip according to claim 1, wherein each of the two main channels is connected to a liquid tube.

9. The microfluidic chip according to claim 1, wherein the elastic membrane is a polymeric membrane.
